# EUROPÄISCHE PATENTSCHRIFT

(11) **EP 0 709 445 B1**
(45) Veröffentlichungstag und Bekanntmachung des Hinweises auf die Patenterteilung: **18.06.1997**
(21) Anmeldenummer: 95116830.1
(22) Anmeldetag: 26.10.1995
(51) Int. Cl.: C09K 19/40, C08G 77/04, C08G 77/38

(54) **Vernetzbare nematische Polyorganosiloxane**
Crosslinkable nematic polyorganosiloxane
Polyorganosiloxane réticulable et nématique

(30) Priorität: 27.10.1994 DE 4438418
(43) Veröffentlichungstag der Anmeldung: 01.05.1996
(73) Patentinhaber: Consortium für elektrochemische Industrie GmbH, D-81379 München (DE)
(72) Erfinder: Weitzel, Hans-Peter, Dr., D-84571 Reischach (DE); Weber-Koegl, Susanne, D-81369 München (DE); Chatzinerantzis, Sotirios, D-85716 Unterschleissheim (DE)
(74) Vertreter: Fritz, Helmut, Dr.

(56) Entgegenhaltungen:
- EP-A- 0 333 022
- EP-A- 0 569 809
- EP-A- 0 615 152
- DE-A- 4 234 845
- DE-A- 4 300 435
- US-A- 5 138 010
- US-A- 5 211 877
- ADVANCED MATERIALS FOR OPTICS AND ELECTRONICS, Bd. 1, Nr. 6, 1.Dezember 1992 Seiten 293-297, XP 000338534 NATARAJAN L V ET AL 'LIQUID CRYSTALLINE SILOXANES CONTAINING SPIROPYRAN CHROMOPHORES AS REVERSIBLE OPTICAL DATA STORAGE MATERIALS'

## Beschreibung

Die vorliegende Erfindung betrifft vernetzbare cyclische Polyorganosiloxane mit mindestens drei unterschiedlichen mesogenen Seitengruppen pro Polyorganosiloxan, deren Herstellung und Verwendung.

Niedermolekulare nematische Verbindungen finden Anwendung in vielfältigen Anzeigeelementen, wie Uhren, Taschenrechnern und Displays und zeichnen sich unter anderem durch eine gute Orientierbarkeit und Schaltbarkeit im elektrischen Feld aus. Die orientierte Struktur ist aber ohne anliegendes elektrisches Feld nicht besonders stabil.

Für Anwendungen in Polarisatoren, Retardern, etc. werden aber Verbindungen benötigt, die eine gute nematische, thermisch stabile Orientierung besitzen. Außerdem sollte für Anwendungen in Polarisatoren eine nematische Phase in einem breiten Temperaturbereich vorliegen, da durch Einmischen von Hilfsstoffen (z.B. Farbstoffe) eine Verschmälerung der nematischen Phase erfolgen kann.

Ein bekannter Weg zur Fixierung flüssigkristalliner Eigenschaften ist die Einbindung der Flüssigkristalle in polymere Netzwerke, z.B. durch nachträgliche Vernetzung von orientierten flüssigkristallinen Seitenkettenpolymeren. kristalline Seitenkettenpolymere lassen sich aber im allgemeinen auf Grund ihrer höheren Viskosität, die im allgemeinen mit dem Molekulargewicht steigt, schlechter orientieren als niedermolekulare Flüssigkristalle. Gut orientierbare flüssigkristalline Seitenkettenpolymere sind z.B. cholesterische Siloxane. Ersetzt man das Cholesterin in diesen Materialien durch einfache Verbindungen, die die Ausbildung einer nematischen Phase begünstigen (nematogene Verbindungen), so erhält man in der Regel zwar nematische Verbindungen, die jedoch nur eine geringe Phasenbreite besitzen und nicht gut orientierbar sind.

In US-A-5,211,877 ist eine nematische Verbindung basierend auf cyclischen Polysiloxanen und zwei aromatische Kerne enthaltenden Mesogenen beschrieben, die nur eine schmale nematische Phase von 69 Grad und eine mäßige Orientierbarkeit besitzt.

Aufgabe der vorliegenden Erfindung war es, flüssigkristalline Verbindungen bereitzustellen, die eine breite nematische Phase aufweisen, sich spontan orientieren lassen und die durch nachträgliche Vernetzung in diesem orientierten nematischen Zustand fixiert werden können.

Die Erfindung betrifft cyclische, flüssigkristalline, nematische Polyorganosiloxane mit mindestens drei unterschiedlichen mesogenen Seitengruppen pro Polyorganosiloxan, wobei mindestens zwei mesogene Seitengruppen pro Polyorganosiloxan jeweils mindestens drei Reste enthalten, die ausgewählt werden aus aromatischen, heteroaromatischen und cycloaliphatischen Resten und mindestens eine der mesogenen Seitengruppen eine Methacryl- oder Acrylgruppe aufweist.

Weder Polyorganosiloxane mit verschiedenartigen mesogenen Seitengruppen mit jeweils zwei aromatischen oder cycloaliphatischen Resten, noch Polyorganosiloxane mit gleichartigen mesogenen Seitengruppen mit jeweils drei oder mehr aromatischen oder cycloaliphatischen Resten lassen sich leicht orientieren und weisen gleichzeitig eine breite nematische Phase auf.

Vorzugsweise sind mindestens zwei der mesogenen Seitengruppen pro Polyorganosiloxan, die jeweils mindestens drei Reste enthalten, die ausgewählt werden aus aromatischen und cycloaliphatischen Resten, unterschiedlich.

Vorzugsweise enthalten mindestens 30 %, insbesondere mindestens 50 % der mesogenen Seitengruppen pro Polyorganosiloxan jeweils mindestens drei Reste, die ausgewählt werden aus aromatischen und cycloaliphatischen Resten.

Vorzugsweise beträgt der Anteil der mesogenen Seitengruppen, die Methacryl- oder Acrylgruppen aufweisen, mindestens 10 %, insbesondere mindestens 20 %.

Die Methacryl- oder Acrylgruppen an den mesogenen Seitengruppen sind vorzugsweise endständig.

Vorzugsweise weisen die cyclischen Polyorganosiloxane 3 bis 20, insbesondere 4 bis 6 Organosiloxaneinheiten auf.

Bei den cyclischen Polyorganosiloxanen handelt es sich vorzugsweise um solche, die aus mindestens drei Einheiten der allgemeinen Formel 1,

[AₒRₚSiO_{2/2}] (1),

aufgebaut sind,
in der **A** eine mesogene Seitengruppe der allgemeinen Formel 2,

R¹-(X¹ ₐ-A¹ _{b}-A² _{c})_{d}-Zₑ-(-X² _{f}-A³ _{g}-A⁴ ₕ-)ᵢ-A⁵ ₖ (2),

bedeutet, wobei in den vorstehenden Formeln 1 und 2
**R** gleiche oder verschiedene, gegebenenfalls mit Halogenatomen substituierte C₁- bis C₁₈-Kohlenwasserstoffreste,
**o** und **p** die Werte 0, 1 oder 2,
**R**^{**1**} einen Rest der Formel CₙHₘ bedeutet, in der
**n** eine ganze Zahl im Wert von 2 bis 20,
**m** den Wert von 2n besitzt,
**X**^{**1**} und **X**^{**2**} gleiche oder verschiedene zweibindige Reste aus der Gruppe -O-, -COO-, -CONH-, -CO-, -S-, -C≡C-, -CH=CH-, -CH=N-, -CH₂CH₂-, -N=N- und -N=N(O)-,
**A**^{**1**}**, A**^{**2**}, **A**^{**3**} und **A**^{**4**} gleiche oder verschiedene zweibindige Reste, aus der Gruppe 1,4-Phenylen-, 1,4-Cyclohexylenreste, substituierte Arylene mit 1 bis 10 Kohlenstoffatomen, substituierte Cycloalkylene mit 1 bis 10 Kohlenstoffatomen und Heteroarylene mit 1 bis 10 Kohlenstoffatomen,
**Z** gleiche oder verschiedene zwei- bis vierwertige Benzol-, Cyclohexan- oder Cyclopentanreste,
**A**^{**5**} gleiche oder verschiedene aus der Gruppe, gesättigte oder olefinisch ungesättigte Alkyl-, Alkoxy- oder Cycloalkylreste mit jeweils 1 bis 16 Kohlenstoffatomen, lestanreste, Cholesterylreste, Halogenatome, stoffatome, Hydroxyl-, Nitril-, Acryloxy-, (Meth)acryloxy-, (Meth)-acryloxyethylenoxy-, (Meth)acryloxydi(ethylenoxy)-,(Meth)acryloxytri(ethylenoxy)-, und Trialkylsiloxygruppen, deren Alkylreste jeweils 1 bis 8 stoffatome besitzen,
**a, b, c, d, f, g, h** und **i** jeweils gleiche oder verschiedene ganze Zahlen im Wert von 0, 1, 2 oder 3, wobei die Summe **a+b+c+d+e+f+g+h+i** mindestens 2 und die Summe von **d** und **i** maximal 5 beträgt,
**k** eine Zahl im Wert von 1, 2, 3, 4 oder 5 und
**e** eine Zahl im Wert von 0 oder 1 bedeuten.

Beispiele für unsubstituierte Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-octylrest und iso-Oktylreste, wie der 2,2,4-Trimethylpentylrest, Nonylreste, nylreste, wie der n-Nonylrest, Decylreste, wie der Dodecylreste, wie der n-Dodecylrest, Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest;

Beispiele für mit Halogenatomen substituierte Reste **R** sind Halogenalkylreste, wie der 3,3,3-Trifluor-n-propylrest, der 2,2,2,2',2',2'-Hexafluorisopropyl-rest, der Heptafluorisopropylrest, und Halogenarylreste, wie der o-, m-, und p-Chlorphenylrest.

Vorzugsweise bedeutet **R** jeweils einen Kohlenwasserstoffrest mit 1 bis 18, insbesondere 1 bis 10, Kohlenstoffatomen. Besonders bevorzugt als Reste **R** sind C₁- bis C₄-Alkylreste und Phenylreste, insbesondere Methylreste.

Die Reste **X**^{**1**} und **X**^{**2**} können, falls sie nicht symmetrisch gebaut sind, mit jedem ihrer Enden an jedem ihrer Bindungspartner verbunden sein. So kann beispielsweise in der vorstehenden Formel 2 und in den nachstehenden Formeln der Rest -COO- auch als -OOC-, der Rest -CONH- auch als -NHCO-, -CH=N- auch als -N=CH- gebunden sein.

Als Substituenten für die substituierten Arylene und Cycloalkylene **A**^{**1**}, **A**^{**2**}, **A**^{**3**} und **A**^{**4**} sind Halogenatome, C₁- bis C₄-Alkoxyreste, Nitro- und Cyanogruppen, C₁- bis C₆-Alkylreste, Carboxy-(C₁- bis C₄-Alkyl)-Reste und Tri-(C₁- bis C₄-Alkyl)-Siloxyreste bevorzugt.

Vorzugsweise hat in **R**^{**1**} n einen Wert von 3 bis 6 und vorzugsweise hat m den Wert 2n.

Beispiele für Reste **A**^{**5**} sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Hexadecylreste, wie der n-Hexadecylrest; Alkenylreste, wie der Vinyl- und der Allylrest, Butenyl-, Pentenyl-, Hexenyl-, Heptenyl-, Oktenyl-, Oktadienyl-, Decenyl-, Dodecenyl- und Hexadecenylreste; Cycloalkylreste, wie Cyclopentyl-, Cyclohexyl-, Cycloheptylreste und Methylcyclohexylreste; Alkyloxyreste, wie der Methoxy-, Ethoxy-, n-Propoxy-, Isopropoxy-, n-, sec.- und tert.-Butoxyrest, Pentoxy-, Hexoxy-, Oktoxy-, Decoxy-, Hexadecoxyreste; Alkenoxyreste, wie der Allyloxyrest, Butenyloxy-, Pentenyloxy-, Hexenyloxy-, Oktenyloxy-, Decenyloxy- und Hexadecenyloxyreste; Cycloalkylreste, wie der Cyclopentyl-, Cyclohexyl-, Cycloheptylrest; Cycloalkenylreste, wie Cyclopentenyl-, Cyclohexenyl- und Cycloheptenylreste; Cholestanreste; der Cholesterylrest; Fluor-, Chlor- oder Bromatome; Wasserstoffatome; Hydroxyl-, Nitril- und Trimethylsilyl-, Triethylsilylgruppen.

Vorzugsweise besitzt **o** die Werte 0 oder 1. Vorzugsweise besitzt **p** die Werte 1 oder 2. Vorzugsweise besitzen **o** und **p** an mindestens 50 % der Einheiten der allgemeinen Formel 1 die Werte 1.

Es ist ganz besonders bevorzugt, daß -R¹-(X¹ₐ-A¹_{b}-A²_{c})_{d}- in der vorstehenden allgemeinen Formel 2 einen Rest der Formel 3 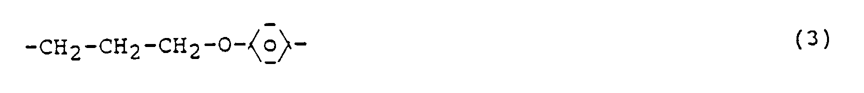 bedeutet.

Bevorzugte mesogene Seitengruppen mit drei aromatischen Resten der allgemeinen Formel 2 sind diejenigen der allgemeinen Formel 4, 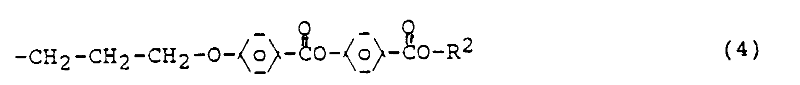 worin **R**² einen 4-Alkylphenyl-, 4-Alkoxyphenyl-, oder 2-Naphthylphenylrest bedeutet.

Bevorzugte mesogene Seitengruppen, welche eine Methacryl- oder Acrylgruppe aufweisen, sind diejenigen der allgemeinen Formel 5, 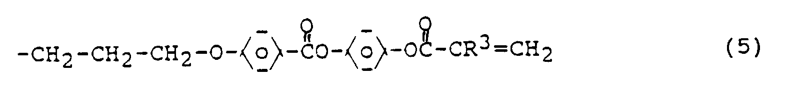 worin **R**^{**3**} ein Wasserstoffatom oder einen Methylrest bedeutet.

Die erfindungsgemäßen cyclischen Polyorganosiloxane können hergestellt werden durch Umsetzung von mindestens drei unterschiedliche mesogene Reste aufweisenden Alkenen oder Alkinen, wobei mindestens zwei der Alkene oder Alkine jeweils mindestens drei Reste enthalten, die ausgewählt werden aus aromatischen, heteroaromatischen und cycloaliphatischen Resten und mindestens eine der Alkene oder Alkine zusätzlich eine Methacryl- oder Acrylgruppe aufweist, mit mindestens drei direkt an Silicium gebundene Wasserstoffatome aufweisenden cyclischen Polyorganosiloxanen.

In einem bevorzugten Verfahren zur Herstellung von cyclischen Polyorganosiloxanen der vorstehenden allgemeinen Formel 1 werden cyclische Polyorganosiloxane, die aus mindestens drei Einheiten der allgemeinen Formel 6

[HₒRₚSiO_{2/2}] (6),

aufgebaut sind,
mit mesogene Reste aufweisenden Alkenen oder Alkinen der allgemeinen Formel 7

R⁴-(X¹ ₐ-A¹ _{b}-A² _{c})_{d}-Zₑ-(-X² _{f}-A³ _{g}-A⁴ ₕ-)ᵢ-A⁵ ₖ (7),

umgesetzt, wobei in den vorstehenden allgemeinen Formeln 6 und 7
**R**^{**4**} einen Rest der Formel CₙHₘ bedeutet, in der
**m** den Wert von 2n-1 oder 2n-3 besitzt und
**o, p, X**^{**1**}**, X**^{**2**}**, A**^{**1**}**, A**^{**2**}**, A**^{**3**}**, A**^{**4**}**, A**^{**5**}**, a, b, c, d, e, f, g, h,i, k, Z,** und **R** die für die allgemeinen Formeln 1 und 2 angegebenen Bedeutungen haben.

Die Umsetzung von direkt an Silicium gebundene Wasserstoffatome aufweisenden cyclischen Polyorganosiloxanen mit mesogene Reste aufweisenden Alkenen oder Alkinen erfolgt in an sich bekannter Weise, z.B. durch Hydrosilylierung in Lösungsmitteln, wie Kohlenwasserstoffen, Ethern oder Estern mit Metallen oder Verbindungen der Platingruppe als Katalysator. Geeignete Verfahren zur Hydrosilylierung sind beispielsweise in der US-A-5,211,877 beschrieben.

Durch die vorstehend beschriebenen Reaktionen erhält man ein Gemisch unterschiedlicher Moleküle.

Die erfindungsgemäßen cyclischen Polyorganosiloxane können für alle Zwecke eingesetzt werden, für die flüssigkristalline Verbindungen, insbesondere vernetzbare flüssigkristalline Verbindungen eingesetzt werden. Besonders geeignet sind sie für die Anwendung in Polarisatoren und Retardern.

Für die vorstehenden Anwendungen können sowohl Mischungen der erfindungsgemäßen cyclischen Polyorganosiloxane untereinander als auch Mischungen der erfindungsgemäßen cyclischen Polyorganosiloxane mit anderen flüssigkristallinen Materialien oder reine cyclische Polyorganosiloxane genutzt werden. Insbesondere können auch Mischungen mit anderen flüssigkristallinen Substanzen verwendet werden.

Die erfindungsgemäßen cyclischen Polyorganosiloxane, welche in den mesogenen Resten der allgemeinen Formel 2 Methacryloxy- und/oder Acryloxygruppen aufweisen, können dreidimensional vernetzt werden. Diese Vernetzung wird vorzugsweise mittels freier Radikale bewirkt, welche durch Peroxide, durch UV-Licht oder durch energiereichere elektromagnetische Strahlung als UV-Licht, oder thermisch erzeugt werden. Die Vernetzung kann aber auch mittels direkt an Siliciumatome gebundene Wasserstoffatome enthaltende Vernetzer unter Katalyse durch die oben genannten Platinmetallkatalysatoren bewirkt werden. Sie kann auch kationisch oder anionisch erfolgen. Besonders bevorzugt ist die Vernetzung durch UV-Licht. Diese Vernetzung ist in der US-A-5,211,877 beschrieben.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20°C;
d) Tg = Glaspunkt;
e) Tc = Klärpunkt;

### Beispiele

### Beispiel 1: Herstellung der Alkene der allgemeinen Formel 7

### a) p-Hydroxybenzoesäureester

1 mol p-Hydroxybenzoesäure und 5 mol des gewünschten Phenols werden in 800 ml Xylol gelöst, mit 20 g p-Toluolsulfonsäure versetzt und am Wasserabscheider erhitzt bis sich die theoretische Menge Wasser abgeschieden hat. Die Reaktionslösung wird auf Raumtemperatur abgekühlt und mit 200 ml Petrolether (40-60°C) versetzt. Das ausgefallene Produkt wird abgesaugt und mit Petrolether phenolfrei gewaschen.

| Ausbeuten: | |
|---|---|
| 4-Hydroxybenzoesäurephenylester | 85% |
| 4-Hydroxybenzoesäure-(4-methoxyphenyl)ester | 74% |
| 4-Hydroxybenzoesäure-(4-ethylphenyl)ester | 80% |
| 4-Hydroxybenzoesäure-(4-propyloxyphenyl)ester | 52% |
| 4-Hydroxybenzoesäure-(2-naphthyl)ester | 50% |

### b) 4-Allyloxybenzoesäure-(4-Hydroxybenzoesäureester) ester

1 mol p-Hydroxybenzoesäureester und 1 mol 4-Allyloxybenzoesäurechlorid, hergestellt nach US-A-4,358,391, werden in 500 ml Toluol gelöst und für 8 h zum Rückfluß erhitzt. Die Reaktionslösung wird auf Raumtemperatur abgekühlt und das ausgefallene Produkt abgesaugt. Das Rohprodukt wird aus Ethanol umkristallisiert.

| Ausbeuten: | |
|---|---|
| 4-Allyloxybenzoesäure-(4-hydroxybenzoesäurephenylester)ester | 85% |
| 4-Allyloxybenzoesäure-(4-hydroxybenzoesäure-4'-nethoxyphenylester)ester | 64% |
| 4-Allyloxybenzoesäure-(4-hydroxybenzoesäure-4'-ethylphenylester)ester | 65% |
| 4-Allyloxybenzoesäure-(4-hydroxybenzoesäure-4'-propyloxyphenylester)ester | 75% |
| 4-Allyloxybenzoesäure-(4-hydroxybenzoesäure-2'-naphthylester)ester | 76% |

### c) 4-Allyloxybenzoesäure-(4-methacryloyloxyphenyl)ester

1 mol 4-Allyloxybenzoesäure-(4-hydroxyphenyl)ester, hergestellt nach US-A-5,211,877, 1,1 mol Methacrylsäureanhydrid und 10 g p-Toluolsulfonsäure werden in 300 ml Toluol gelöst und für eine Stunde auf 100°C erwärmt. Die abgekühlte Lösung wird mit 100 ml Hexan versetzt und der ausgefallene Niederschalg aus Ethanol umkristallisiert.
Ausbeute: 75-80%

### d) 4-Allyloxybenzoesäure-(4-R-phenyl)ester

1 mol 4-substituiertes Phenol und 1 mol 4-Allyloxybenzoesäurechlorid werden in 300 ml Toluol gelöst und für 8 h zum Rückfluß erhitzt. Die Reaktionslösung wird auf Raumtemperatur abgekühlt und das ausgefallene Produkt abgesaugt. Das Rohprodukt wird aus Ethanol umkristallisiert.

| Ausbeuten: | |
|---|---|
| 4-Allyloxybenzoesäurephenylester | 85% |
| 4-Allyloxybenzoesäure-(4-methoxyphenyl)ester | 90% |
| 4-Allyloxybenzoesäure-(4-ethylphenyl)ester | 90% |
| 4-Allyloxybenzoesäure-(4-propyloxyphenyl)ester | 80% |

### Beispiel 2: Erfindungsgemäßer Flüssigkristall mit breiter nematischer Phase und guter Orientierbarkeit

14,96 g Pentamethylcyclopentasiloxan, 12,71 g 4-Allyloxybenzoesäure-(4-hydroxybenzoesäurephenylester)ester, 13,66 g 4-Allyloxybenzoesäure-(4-hydroxybenzoesäure-4'-ethylphenylester) ester, 13,73 g 4-Allyloxybenzoesäure-(4-hydroxybenzoesäure-4'-methoxyphenylester)ester und 14,68 g 4-Allyloxybenzoesäure-(4-hydroxybenzoesäure-4'-propyloxyphenylester)ester werden in 100 ml Toluol gelöst, mit 0,5 ml Dicyclopentadienplatindichloridlösung (1 Gew.% in Methylenchlorid) versetzt und für eine Stunde auf 100°C erwärmt. Die Lösung wird auf 50°C abgekühlt, mit 30,64 g 4-Allyloxybenzoesäure-(4-methacryloyloxyphenyl)ester, 100 ml Toluol und 100 mg 4-Methoxyphenol versetzt und für eine Stunde bei 80°C gerührt. Das Produkt wird über einen Mikroporenfilter filtriert und getrocknet; man erhält 100 g einer Substanz mit einer nematischen Phase zwischen dem Glaspunkt bei 22°C und dem Klärpunkt bei 168°C.

### Beispiel 3: Erfindungsgemäßer Flüssigkristall mit breiter nematischer Phase und guter Orientierbarkeit

1,73 g Tetramethylcyclotetrasiloxan, 2,0 g 4-Allyloxybenzoesäure-(4-hydroxybenzoesäurephenylester)ester, 12,15 g 4-Allyloxybenzoesäure-(4-hydroxybenzoesäure-4'-ethylphenylester)ester und 2,16 g, 4-Allyloxybenzoesäure-(4-hydroxybenzoesäure-4'-methoxyphenylester)ester werden in 20 ml Toluol gelöst, mit 0,05 ml Dicyclopentadienplatindichloridlösung (1 Gew.% in Methylenchlorid) versetzt und für eine Stunde auf 100°C erwärmt. Die Lösung wird auf 50°C abgekühlt, mit 3,61 g 4-Allyloxybenzoesäure-(4-methacryloyloxyphenyl)ester, 20 ml Toluol und 10 mg 4-Methoxyphenol versetzt und für eine Stunde bei 80°C gerührt. Das Produkt wird über einen Mikroporenfilter filtriert und getrocknet; man erhält 11 g einer Substanz mit einer nematischen Phase zwischen dem Glaspunkt bei 30°C umd dem Klärpunkt bei 181°C.

### Beispiel 4: Erfindungsgemäßer Flüssigkristall mit breiter nematischer Phase und guter Orientierbarkeit

1,82 g Pentamethylcyclopentasiloxan, 1,70 g 4-Allyloxybenzoesäure-(4-hydroxybenzoesäurephenylester)ester, 1,83 g 4-Allyloxybenzoesäure-(4-hydroxybenzoesäure-4'-ethylphenylester) ester, 1,84 g 4-Allyloxybenzoesäure-(4-hydroxybenzoesäure-4'-methoxyphenylester)ester und 1,96 g 4-Allyloxybenzoesäure-(4-hydroxybenzoesäure-4'-propyloxyphenylester)ester werden in 20 ml Toluol gelöst, mit 0,05 ml Dicyclopentadienplatindichloridlösung (1 Gew. % in Methylenchlorid) versetzt und für eine Stunde auf 100°C erwärmt. Die Lösung wird auf 50°C abgekühlt, mit 3,44 g 4-Allyloxybenzoesäure-(4-methoxyphenyl)ester und 20 ml Toluol versetzt und für eine Stunde bei 80°C gerührt. Das Produkt wird über einen Mikroporenfilter filtriert und getrocknet; man erhält 12 g einer Substanz mit einer nematischen Phase zwischen dem Glaspunkt bei 27°C und dem Klärpunkt bei 192°C.

### Vergleichsbeispiel 1

### Entspricht Beispiel 1d aus US-A-5,211,877

Eine Lösung aus 2.0 g 4-(Prop-2-en-1-oxy)benzoesäure-4-cyanophenylester, 5.72 g 4-Trimethylsilyloxybenzoesäure-4-(prop-2-en-1-oxy)phenylester, 1.43 g Hexamethylcyclohexasiloxan und 2 mg Dicyclopentadienplatindichlorid in 20 ml Toluol wird 30 min unter Rückfluß gekocht. Nach Zusatz von 10 ml Ethanol und 0.2 g Kaliumhydroxyd wird 20 min unter Rückfluß gekocht und so der Silylether gespalten. Anschließend wird die Lösung auf 1/3 ihres Volumens eingeengt, mit 2.0 g p-Toluolsulfonsäure und 15.4 g Methacrylsäureanhydrid versetzt und nochmals 30 min unter Rückfluß gekocht. Nach dem Erkalten wird zweimal aus Toluol / Ethanol umgefällt. Man erhält ein Produkt mit einer nematischen Phase zwischen dem Glaspunkt bei 25°C und dem Klärpunkt bei 94°C.

### Vergleichsbeispiel 2

### Flüssigkristall mit geringer Phasenbreite und schlechter Orientierbarkeit aufgebaut aus einer Mischung aus mesogenen Seitengruppen mit 2 Aromaten

2,27 g Pentamethylcyclopentasiloxan, 1,20 g 4-Allyloxybenzoesäurephenylester, 1,33 g 4-Allyloxybenzoesäure-(4'-ethylphenyl)ester, 1,34 g 4-Allyloxybenzoesäure-(4'-methoxyphenyl)ester und 1,47 g 4-Allyloxybenzoesäure-(4'-propyloxyphenyl)ester werden in 20 ml Toluol gelöst, mit 0,05 ml clopentadienplatindichloridlösung (1 Gew.% in Methylenchlorid) versetzt und für eine Stunde auf 100°C erwärmt. Die Lösung wird auf 50°C abgekühlt, mit 6,39 g 4-Allyloxybenzoesäure-(4-methacryloyloxyphenyl)ester, 10 mg 4-Methoxyphenol und 20 ml Toluol versetzt und für eine Stunde bei 80°C gerührt. Das Produkt wird über einen Mikorporenfilter filtriert und getrocknet; man erhält 13 g einer Substanz mit einer nematischen Phase zwischen dem Glaspunkt bei -6°C und dem Klärpunkt bei 33°C.

### Vergleichsbeispiel 3

### Flüssigkristall mit großer Phasenbreite aber schlechter Orientierbarkeit aufgebaut aus einem Homopolymer aus mesogenen Seitengruppen mit 3 Aromaten

0,15 g Tetramethylcyclotetrasiloxan und 1,0 g 4-Allyloxybenzoesäure-(4-hydroxybenzoesäure-4'-nethoxyphenylester)ester werden in 10 ml Toluol gelöst, mit 0,02 ml Dicyclopentadienplatindichloridlösung (1 Gew.% in Methylenchlorid) versetzt und für eine Stunde auf 100°C erwärmt. Das Produkt wird über einen Mikroporenfilter filtriert und getrocknet; man erhält 1,0 g einer Substanz mit einer nematischen Phase zwischen dem Glaspunkt bei 46°C und dem Klärpunkt bei 172°C.

**Tabelle :**

| Phasenbreite und Orientierbarkeit der nematischen Verbindungen | | | |
|---|---|---|---|
| Material | Tg | Tc | Orientierbarkeit |
| Beispiel 2 | 22 | 168 | sehr gut |
| Beispiel 3 | 30 | 181 | sehr gut |
| Beispiel 4 | 27 | 192 | sehr gut |
| Vergleichsbeispiel 1 | 25 | 94 | schlecht |
| Vergleichsbeispiel 2 | -6 | 33 | schlecht |
| Vergleichsbeispiel 3 | 46 | 172 | schlecht |

## Patentansprüche

1. Cyclische, flüssigkristalline, nematische Polyorganosiloxane mit mindestens drei unterschiedlichen mesogenen Seitengruppen pro Polyorganosiloxan, wobei mindestens zwei mesogene Seitengruppen pro Polyorganosiloxan jeweils mindestens drei Reste enthalten, die ausgewählt werden aus aromatischen, heteroaromatischen und cycloaliphatischen Resten und mindestens eine der mesogenen Seitengruppen eine Methacryl- oder Acrylgruppe aufweist.

2. Cyclische Polyorganosiloxane nach Anspruch 1, die aus mindestens drei Einheiten der allgemeinen Formel 1,
[AₒRₚSiO_{2/2}] (1),
aufgebaut sind,
in der **A** eine mesogene Seitengruppe der allgemeinen Formel 2,
R¹-(X¹ ₐ-A¹ _{b}-A² _{c})_{d}-Zₑ-(-X² _{f}-A³ _{g}-A⁴ ₕ-)ᵢ-A⁵ ₖ (2),
bedeutet, wobei in den vorstehenden Formeln 1 und 2
**R** gleiche oder verschiedene, gegebenenfalls mit Halogenatomen substituierte C₁-bis C₁₈-Kohlenwasserstoffreste,
**o** und **p** die Werte 0, 1 oder 2,
**R**^{**1**} einen Rest der Formel CₙHₘ bedeutet, in der
**n** eine ganze Zahl im Wert von 2 bis 20,
**m** den Wert von 2n besitzt,
**X**^{**1**} und **X**^{**2**} gleiche oder verschiedene zweibindige Reste aus der Gruppe -O-, -COO-, -CONH-, -CO-, -S-, -C≡C-, -CH=CH-, -CH=N-, -CH₂CH₂-, -N=N- und -N=N(O)-,
**A**^{**1**}, **A**^{**2**}, **A**^{**3**} und **A**^{**4**} gleiche oder verschiedene zweibindige Reste, aus der Gruppe 1,4-Phenylen-, 1,4-Cyclohexylenreste, substituierte Arylene mit 1 bis 10 Kohlenstoffatomen, substituierte Cycloalkylene mit 1 bis 10 Kohlenstoffatomen und Heteroarylene mit 1 bis 10 Kohlenstoffatomen,
**Z** gleiche oder verschiedene zwei- bis vierwertige Benzol-, Cvclohexan- oder Cyclopentanreste,
**A**^{**5**} gleiche oder verschiedene aus der Gruppe, gesättigte oder olefinisch ungesättigte Alkyl-, Alkoxy- oder Cycloalkylreste mit jeweils 1 bis 16 Kohlenstoffatomen, Cholestanreste, Cholesterylreste, Halogenatome, Wasserstoffatome, Hydroxyl-, Nitril-, Acryloxy-, (Meth)acryloxy-, (Meth)-acryloxyethylenoxy-, (Meth)acryloxydi(ethylenoxy)-, (Meth)acryloxytri(ethylenoxy)- und Trialkylsiloxygruppen, deren Alkylreste jeweils 1 bis 8 Kohlenstoffatome besitzen,
**a, b, c, d, f, g, h** und **i** jeweils gleiche oder verschiedene ganze Zahlen im Wert von 0, 1, 2 oder 3, wobei die Summe a+b+c+d+e+f+g+h+i mindestens 2 und die Summe von d und i maximal 5 beträgt,
**k** eine Zahl im Wert von 1, 2, 3, 4 oder 5 und
**e** eine Zahl im Wert von 0 oder 1 bedeuten.

3. Verfahren zur Herstellung der cyclischen Polyorganosiloxane nach Anspruch 1, durch Umsetzung von mindestens drei unterschiedliche mesogene Reste aufweisenden Alkenen oder Alkinen, wobei mindestens zwei der Alkene oder Alkine jeweils mindestens drei Reste enthalten, die ausgewählt werden aus aromatischen, heteroaromatischen und cycloaliphatischen Resten und mindestens eine der Alkene oder Alkine zusätzlich eine Methacryl- oder Acrylgruppe aufweist, mit mindestens drei direkt an Silicium gebundene Wasserstoffatome aufweisenden cyclischen Polyorganosiloxanen.

4. Verfahren zur Herstellung der cyclischen Polyorganosiloxane nach Anspruch 2, bei dem cyclische Polyorganosiloxane, die aus mindestens drei Einheiten der allgemeinen Formel 6
[HₒRₚSiO_{2/2}] (6),
aufgebaut sind,
mit mesogene Reste aufweisenden Alkenen oder Alkinen der allgemeinen Formel 7
R⁴-(X¹ ₐ-A¹ _{b}-A² _{c})_{d}-Zₑ-(-X² _{f}-A³ _{g}-A⁴ ₕ-)ᵢ-A⁵ ₖ (7),
umgesetzt werden, wobei in den vorstehenden allgemeinen Formeln 6 und 7
**R**^{**4**} einen Rest der Formel CₙHₘ bedeutet, in der
**m** den Wert von 2n-1 oder 2n-3 besitzt und
**o, p, X**^{**1**}**, X**^{**2**}**, A**^{**1**}**, A**^{**2**}**, A**^{**3**}**, A**^{**4**}**, A**^{**5**}**, a, b, c, d, e, f, g, h,i, k, Z,** und **R** die für die allgemeinen Formeln 1 und 2 angegebenen Bedeutungen haben.

5. Verwendung der cyclischen Polyorganosiloxane nach Anspruch 1 oder 2 in Polarisatoren und Retardern.

## Claims

1. Cyclic, liquid-crystalline, nematic polyorganosiloxane containing at least three different mesogenic side groups per polyorganosiloxane, where at least two mesogenic side groups per polyorganosiloxane each contain at least three radicals selected from aromatic, heteroaromatic and cycloaliphatic radicals, and at least one of the mesogenic side groups contains a methacrylic or acrylic group.

2. Cyclic polyorganosiloxane according to Claim 1 built up from at least three units of the general formula 1
[AₒRₚSiO_{2/2}] (1),
in which A is a mesogenic side group of the general formula 2,
R¹- (X¹ ₐ-A¹ _{b}-A² _{c})_{d}-Zₑ-(-X² _{f}-A³ _{g}-A⁴ ₕ-)ᵢ-A⁵ ₖ (2),
where, in the above formulae 1 and 2,
**R** are identical or different, optionally halogen-substituted C₁- to C₁₈-hydrocarbon radicals,
**o** and **p** have the values 0, 1 or 2,
**R**^{**1**} is a radical of the formula CₙHₘ, in which
**n** is an integer having a value of from 2 to 20,
**m** has the value 2n,
**X**^{**1**} and **X**^{**2**} are identical or different divalent radicals from the group consisting of -O-, -COO-, -CONH-, -CO-, -S-, -C≡C-, -CH=CH-, -CH=N-, -CH₂CH₂-, -N=N- and -N=N(O)-,
**A**^{**1**}**, A**^{**2**}**, A**^{**3**} and **A**^{**4**} are identical or different divalent radicals from the group consisting of 1,4-phenylene and 1,4-cyclohexylene radicals, substituted arylenes having 1 to 10 carbon atoms, substituted cycloalkylenes having 1 to 10 carbon atoms and heteroarylenes having 1 to 10 carbon atoms,
**Z** are identical or different divalent to tetravalent benzene, cyclohexane or cyclopentane radicals,
**A**^{**5**} are identical or different radicals from the group consisting of saturated or olefinically unsaturated alkyl, alkoxy or cycloalkyl radicals, each having 1 to 16 carbon atoms, cholestan radicals, cholesteryl radicals, halogen atoms, hydrogen atoms, hydroxyl, nitrile, acryloxy, (meth)acryloxy, (meth)acryloxyethylenoxy, (meth)acryloxydi(ethylenoxy), (meth)acryloxytri(ethylenoxy) and trialkylsiloxy groups whose alkyl radicals each have 1 to 8 carbon atoms,
**a, b, c, d, f, g, h** and **i** are each identical or different integers having a value of 0, 1, 2 or 3, where the sum **a+b+c+d+e+f+g+h+i** is at least 2 and the sum of d and i is a maximum of 5,
**k** is a number having a value of 1, 2, 3, 4 or 5, and
**e** is a number having a value of 0 or 1.

3. Process for the preparation of a cyclic polyorganosiloxane according to Claim 1 by reacting alkenes or alkynes containing at least three different mesogenic radicals, where at least two of the alkenes or alkynes each contain at least three radicals selected from aromatic, heteroaromatic and cycloaliphatic radicals, and at least one of the alkenes or alkynes additionally contains a methacrylic or acrylic group, with cyclic polyorganosiloxanes containing at least three hydrogen atoms bonded directly to silicon.

4. Process for the preparation of a cyclic polyorganosiloxane according to Claim 2, in which cyclic polyorganosiloxanes built up from at least three units of the general formula 6
[HₒRₚSiO_{2/2}] (6)
are reacted with alkenes or alkynes containing mesogenic radicals, of the general formula 7
R⁴-(X¹ ₐ-A¹ _{b}-A² _{c})_{d}-Zₑ-(-X² _{f}-A³ _{g}-A⁴ ₕ-)ᵢ-A⁵ ₖ (7)
where, in the above general formulae 6 and 7,
**R**^{**4**} is a radical of the formula CₙHₘ, in which
**m** has the value 2n-1 or 2n-3 and
**o, p, X**^{**1**}**, X**^{**2**}**, A**^{**1**}**, A**^{**2**}**, A**^{**3**}**, A**^{**4**}**, A**^{**5**}**, a, b, c, d, e, f, g, h, i, k, Z** and **R** are as defined for the general formulae 1 and 2.

5. Use of a cyclic polyorganosiloxane according to Claim 1 or 2 in polarizers and retarders.

## Revendications

1. Polyorganosiloxanes cycliques, cristallins liquides, nématiques, contenant au moins trois groupes latéraux mésogènes différents par polyorganosiloxane, dans lesquels au moins deux groupes latéraux mésogènes par polyorganosiloxane contiennent chacun au moins trois radicaux choisis parmi des radicaux aromatiques, hétéro-aromatiques et cycloaliphatiques, et au moins l'un des groupes latéraux mésogènes contient un groupe méthacrylique ou acrylique.

2. Polyorganosiloxanes cycliques selon la revendication 1, constitués d'au moins trois motifs de formule générale 1,
[AₒRₚSiO_{2/2}] (1),
dans laquelle A représente un groupe latéral mésogène de formule générale 2,
R¹-(X¹ ₐ-A¹ _{b}-A² _{c})_{d}-Zₑ-(-X² _{f}-A³ _{g}-A⁴ ₕ-)ᵢ-A⁵ ₖ (2),
dans laquelle, dans les formules ci-dessus 1 et 2,
R représente des radicaux hydrocarbure en C₁ à C₁₈, identiques ou différents, éventuellement substitués par des atomes d'halogène
o et p ont les valeurs 0, 1 ou 2,
R¹ représente un radical de formule CₙHₘ, dans laquelle
n représente un entier ayant une valeur de 2 à 20,
m a la valeur 2n,
X¹ et X² sont des radicaux divalents identiques ou différents parmi le groupe constitué de -O-, -COO-, -CONH-, -CO-, -S-, -C≡C-, -CH=CH-, -CH=N-, -CH₂CH₂-, -N=N- et -N=N(O)-,
A¹, A², A³ et A⁴ représentent des radicaux divalents identiques ou différents parmi le groupe constitué des radicaux 1,4-phénylène et 1,4-cyclohexylène, d'arylènes substitués ayant 1 à 10 atomes de carbone, de cycloalkylènes substitués ayant 1 à 10 atomes de carbone et d'hétéroarylènes ayant 1 à 10 atomes de carbone,
Z représente des radicaux benzène, cyclohexane ou cyclopentane divalents à tétravalents identiques ou différents,
A⁵ représente des radicaux identiques ou différents parmi le groupe constitué de radicaux alkyle, alcoxy ou cycloalkyle saturés ou oléfiniquement insaturés, ayant chacun 1 à 16 atomes de carbone, des radicaux cholestane, des radicaux cholestéryle, des atomes d'halogène, des atomes d'hydrogène, les groupes hydroxyle, nitrile, acryloxy, (meth)acryloxy, (méth)acryloxyéthylèneoxy, (méth)acryloxydi(éthylèneoxy), (méth)acryloxytri(éthylèneoxy) et trialkylsiloxy dont les radicaux alkyle ont chacun 1 à 8 atomes de carbone,
a, b, c, d, f, g, h et i représentent chacun des entiers identiques ou différents ayant une valeur de 0, 1, 2 ou 3, la somme a+b+c+d+e+f+g+h+i valant au moins 2 et la somme de d et i valant au maximum 5,
k représente un nombre ayant une valeur de 1, 2, 3, 4 ou 5 et
e représente un nombre ayant une valeur de 0 ou 1

3. Procédé de préparation des polyorganosiloxanes cycliques selon la revendication 1, par réaction d'au moins trois alcènes ou alcynes contenant des radicaux mésogènes différents, au moins deux des alcènes ou alcynes contenant chacun au moins trois radicaux, choisis parmi des radicaux aromatiques, hétéroaromatiques et cycloaliphatiques et au moins l'un des alcènes ou alcynes contenant en outre un groupe méthacrylique ou acrylique, avec des polyorganosiloxanes cycliques contenant au moins trois atomes d'hydrogène liés directement au silicium.

4. Procédé de préparation des polyorganosiloxanes cycliques selon la revendication 2, dans lequel on fait réagir des polyorganosiloxanes cycliques constitués d'au moins trois motifs de formule générale 6
[HₒRₚSiO_{2/2}] (6)
avec des alcènes ou alcynes contenant des radicaux mésogènes, de formule générale 7
R⁴-(X¹ ₐ-A¹ _{b}-A² _{c})_{d}-Zₑ-(-X² _{f}-A³ _{g}-A⁴ ₕ-)ᵢ-A⁵ ₖ (7)
où dans les formules générales ci-dessus 6 et 7,
R⁴ est un radical de formule CₙHₘ, dans laquelle
m a la valeur 2n-1 ou 2n-3 et
o, p, X¹, X², A¹, A², A³, A⁴, A⁵, a, b, c, d, e, f, g, h, i, k, Z et R ont les significations données pour les formules générales 1 et 2.

5. Utilisation des polyorganosiloxanes cycliques selon la revendication 1 ou 2 dans des polariseurs et des ralentisseurs.
